# FASCICULE DE BREVET EUROPEEN

(11) **EP 4 549 864 B1**
(45) Date de publication et mention de la délivrance du brevet: **25.03.2026**
(21) Numéro de dépôt: 24209927.3
(22) Date de dépôt: 30.10.2024
(51) Int. Cl.: F28D 1/03, F28F 3/12, H01M 10/613, H01M 10/625, H01M 10/6556, H01M 10/6568, B33Y 80/00, F28D 21/00

(54) **DISPOSITIF DE REFROIDISSEMENT POUR UNE BATTERIE ÉLECTRIQUE**
KÜHLVORRICHTUNG FÜR EINE ELEKTRISCHE BATTERIE
COOLING DEVICE FOR AN ELECTRIC BATTERY

(30) Priorité: 31.10.2023 FR 2311874
(43) Date de publication de la demande: 07.05.2025
(73) Titulaire: HUTCHINSON, 75008 Paris (FR)
(72) Inventeur: MOUNIER, Jean-Yves, 45200 PAUCOURT (FR); MORETTI, Nicola, 10090 GASSINO TORINESE (TO) (IT); VIROGLIO, Franco, 10034 CHIVASSO (TO) (IT)
(74) Mandataire: Ernest Gutmann - Yves Plasseraud S.A.S.

(56) Documents cités:
- EP-A1- 2 744 034
- DE-A1- 102017 210 343
- FR-A1- 3 100 608

## Description

### Domaine technique de l'invention

L'invention concerne le domaine technique des batteries électriques, et plus précisément celui du refroidissement desdites batteries. Lesdites batteries sont par exemple installées sur un véhicule à propulsion électrique ou hybride.

A ce titre, l'invention concerne un dispositif de refroidissement pour une batterie électrique. L'invention concerne également une batterie électrique comprenant un tel dispositif de refroidissement.

### Etat de la technique antérieure

Dans une batterie électrique à cellules, c'est-à-dire une batterie comprenant plusieurs éléments de batterie indépendants regroupés dans une enceinte, les éléments les plus chauds sont situés au centre de celui-ci. Comme les éléments sont généralement disposé en contact les uns avec les autres par leurs faces latérales, par souci de réduction de l'encombrement global, la chaleur que génèrent ces éléments les plus enclavés est uniquement évacuée au niveau de leurs faces inférieures. Les connecteurs électriques entre ces différents éléments de batterie sont, eux, généralement situés sur les faces supérieures, et sont susceptibles de dégager également une chaleur importante.

Le refroidissement fluide indirect est la méthode la plus couramment utilisée par les constructeurs car elle est efficace, assez simple à mettre en place et peu coûteuse. Cette méthode consiste à faire circuler un fluide de refroidissement (généralement un mélange eau-glycol) dans un dispositif de refroidissement situé sous les éléments de batterie. Le fluide joue un rôle de caloporteur et vient prélever des calories thermiques dans la batterie pour les évacuer en dehors de l'enceinte au cours de sa circulation.

Par conséquent, l'évacuation de la chaleur est fortement dépendante de la résistance thermique d'échange entre les connecteurs électriques ou la face inférieure des éléments de batterie selon les cas d'une part, et le dispositif de refroidissement d'autre part.

Afin d'améliorer cette résistance thermique d'échange, il est connu d'utiliser des matériaux d'interface thermique, comme des résines thermo conductrices, entre la plaque froide du dispositif de refroidissement et les surfaces inférieures des éléments de batterie ou les structures complexes des connecteurs, pour combler les écarts locaux entre ces surfaces dus aux aspérités de ces structures solides et à leur rugosité. Une telle solution augmente cependant de manière notable le coût et la masse de la batterie. De plus, le contact thermique permis par l'utilisation d'un tel matériau d'interface reste nettement moins efficace qu'un contact mécanique direct entre des matériaux métalliques conducteurs.

Une autre possibilité pour améliorer le contact thermique est l'emploi d'une enveloppe souple pour la circulation du fluide caloporteur à la place d'une structure rigide, ladite enveloppe souple se déformant librement sous l'effet de la pression de circulation du fluide caloporteur et venant alors épouser les contours de la surface inférieure des éléments de batterie ou des connecteurs électriques, procurant par là un bon contact thermique.

L'enveloppe souple est conçue à l'aide de deux feuillets de film multi matériau et multicouches assemblées par soudage local de manière à former un ou plusieurs canaux de circulation de fluide. Les deux feuillets peuvent être séparés ou bien formés par une unique feuille repliée sur elle-même.

Une telle enveloppe permet ainsi d'avoir un dispositif de refroidissement bénéficiant d'un bon contact thermique avec les éléments de batterie à refroidir, tout en étant léger et de fabrication simple par rapport à des refroidisseurs rigides antérieurs.

Cependant, une telle enveloppe souple n'offre pas une tenue mécanique suffisante pour être disposée au-dessus des éléments de batterie ou dans une position verticale ou suspendue, à cause de sa faible résistance mécanique. De plus, les régions de l'enveloppe qui ne se trouvent pas positionnées contre un élément rigide exerçant une contre-pression peuvent s'user et se déformer à long terme sous l'effet de la pression interne d'écoulement du fluide.

Le document EP 2744034 A1 décrit une enveloppe souple de circulation de liquide de refroidissement pour une batterie électrique, comprenant une structure de support rigide interne à la poche et soudée à l'enveloppe.

### Présentation de l'invention

L'invention vise à remédier à ces inconvénients, en proposant un dispositif de refroidissement pour une batterie électrique, mettant en oeuvre une enveloppe souple telle que décrit plus haut et approprié pour une utilisation dans une position verticale ou suspendue, ainsi que pour être disposé en contact avec des éléments à refroidir présents sur les faces supérieures, inférieures et/ou latérales des éléments de batterie.

A cet effet, l'invention a pour objet un dispositif de refroidissement pour une batterie électrique, le dispositif de refroidissement comprenant :
- une enveloppe formée de deux feuillets de matériau souple s'étendant en regard l'un de l'autre, l'enveloppe présentant des régions de soudure dans lesquelles les feuillets sont solidaires l'un de l'autre et des régions de séparation dans lesquelles les feuillets sont aptes à s'étendre l'écart l'un de l'autre, l'enveloppe définissant des bords latéraux,
- au moins un conduit de circulation de fluide s'étendant entre les feuillets à travers au moins l'une des régions de séparation, et
- au moins un connecteur fluidique d'entrée et au moins un connecteur fluidique de sortie de l'enveloppe, débouchant dans l'au moins un conduit de circulation de fluide,
- une structure de support rigide, la structure de support comprenant une première partie caractérisé en ce que le dispositif de refroidissement comprend en outre une deuxième partie ainsi que des moyens d'assemblage de la deuxième partie et de la première partie, la deuxième partie et la première partie étant conformées pour enserrer au moins un des bords latéraux de l'enveloppe entre elles, la deuxième partie définissant au moins un évidement prévu pour s'ouvrir au niveau d'au moins une des régions de séparation de l'enveloppe de manière à permettre à l'enveloppe de faire saillie hors de la structure de support à travers ledit évidement.

Un tel dispositif de refroidissement permet d'avoir une tenue mécanique satisfaisante et peut ainsi être positionné suspendu et/ou en position verticale, tout en bénéficiant des avantages d'une enveloppe souple pour la circulation du fluide de refroidissement, notamment en termes de contact thermique.

La structure de support est notamment agencée pour enserrer au moins deux bords latéraux de l'enveloppe souple, et plus particulièrement deux bords latéraux opposés.

Avantageusement, la structure de support est agencée pour enserrer tous les bords latéraux de l'enveloppe souple afin d'avoir un bon maintien en place de l'enveloppe et d'en améliorer l'étanchéité.

La structure de support peut comprendre en outre des moyens de fixation adaptés pour fixer la structure de support à un couvercle, une paroi latérale et/ou une paroi inférieure d'une enceinte de batterie électrique, et/ou à des éléments de batterie de la batterie électrique, par exemple des moyens de fixation par encliquetage, par vissage, ou des moyens articulés.

Une telle caractéristique permet un assemblage simple du dispositif de refroidissement en position suspendue au-dessus des contacts des éléments de batterie, et simplifie également un éventuel démontage du dispositif pour son entretien.

Les moyens d'assemblage de la deuxième partie à la première partie peuvent être des moyens d'assemblage par encliquetage comprenant au moins une dent s'étendant en saillie depuis un bord de l'une parmi la deuxième partie et la première partie et au moins une indentation correspondante définie par l'autre de la deuxième partie et de la première partie.

Une telle caractéristique permet un assemblage simplifié du dispositif de refroidissement, et son démontage éventuel pour l'entretien ou le remplacement de l'enveloppe souple.

La première partie peut être fermée en regard de chaque évidement de la deuxième partie.

Une telle caractéristique permet d'appliquer une contre-pression sur l'enveloppe au niveau des canaux d'écoulement de fluide, sur la face qui n'est pas en contact avec les éléments à refroidir, afin de réduire les déformations de la poche à long terme.

La structure de support peut définir un rebord latéral agencé pour être positionné le long d'un contour externe d'un ensemble d'éléments de batteries d'une batterie électrique.

Une telle caractéristique permet de garantir et de maintenir les positions relatives du dispositif de refroidissement et des éléments à refroidir, ce qui permet de réduire les risques d'erreurs d'assemblage ou de déplacement non-désiré.

L'une de la deuxième partie ou de la première partie peut définir au moins un orifice agencé pour permettre le passage de l'un des connecteurs fluidiques reliés à l'enveloppe.

Une telle caractéristique permet d'améliorer le maintien en place des connecteurs fluidiques qui sont ainsi fixés à la structure de support.

Avantageusement, les connecteurs fluidiques présentent une partie évasée positionnée intérieurement par rapport à l'orifice correspondant et permettant le blocage du connecteur contre la structure de support.

La structure de support peut présenter une forme sensiblement rectangulaire, l'évidement de la deuxième partie s'étendant selon un parcours formant au moins un aller-retour sur une étendue de ladite forme rectangulaire.

Une telle caractéristique permet de refroidir les connecteurs de l'ensemble de batterie en utilisant un unique conduit de circulation de fluide et en conférant ainsi à l'ensemble de refroidissement une géométrie simple et une bonne résistance mécanique.

L'évidement de la deuxième partie peut présenter une forme en U et l'enveloppe comprenant au moins un conduit d'écoulement présentant une forme en U correspondante.

Au moins l'une de la deuxième partie et de la première partie peut comprendre au moins une nervure de rigidification.

Une telle caractéristique permet d'améliorer la résistance mécanique de la structure de support à la flexion et au flambage, améliorant ainsi la durabilité du dispositif de refroidissement.

La structure de support peut être formée en matériau plastique par moulage.

Une telle caractéristique permet de fabriquer la structure de support de manière simple, rapide et peu coûteuse.

Le matériau plastique est par exemple du polypropylène (PP), du polyamide (PA), du polyéthylène (PE), du polysulfure de phénylène (PPS), du polyoxyméthylène (POM), ou autre. Optionnellement, le matériau plastique peut être renforcé par l'ajout de fibres de verre dans la matrice polymère.

Alternativement, la structure de support peut être formée par un procédé de fabrication additive, ou encore par estampage.

L'invention concerne également une batterie électrique comprenant :
- une pluralité d'éléments de batterie disposés dans une enceinte, chaque élément de batterie présentant des éléments à refroidir disposés sur une face inférieure, supérieure ou latérale de l'élément de batterie, et
- un dispositif de refroidissement comme plus haut,
la structure de support étant positionnée pour avoir chaque évidement en regard des éléments à refroidir, l'enveloppe souple étant disposée pour entrer en contact avec les éléments à refroidir lorsqu'un fluide de de refroidissement circule dans l'au moins un conduit de circulation.

### Brève description des figures

[Fig. 1] est une vue en perspective éclatée des principaux éléments d'une batterie électrique selon l'invention,
[Fig. 2] est une vue en perspective éclatée d'un dispositif de refroidissement de la batterie de la figure 1,
[Fig. 3] est une vue en coupe transversale du dispositif de refroidissement de la figure 2,
[Fig. 4] est une vue en perspective de détail montrant des moyens d'assemblage d dispositif de refroidissement des figures 1 et 2,
[Fig. 5] est une vue en perspective d'une embase d'un connecteur fluidique du dispositif de refroidissement des figures 2 à 4,
[Fig. 6] est une vue en perspective de l'embase de la figure 5 portant un joint torique,
[Fig. 7] est une vue en perspective du connecteur fluidique des figures 5 et 6 assemblé, et
[Fig. 8] est une vue en coupe du connecteur des figures 5 à 7.

### Description détaillée de l'invention

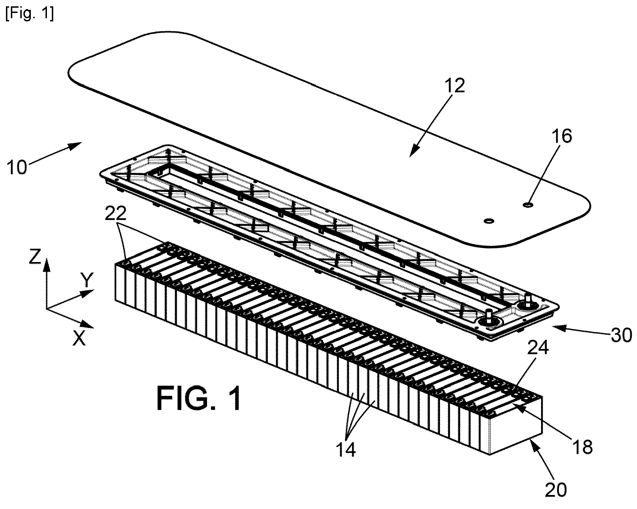

La figure 1 représente une batterie 10 électrique destinée au stockage d'énergie, destinée notamment aux applications embarquées sur un véhicule, par exemple un véhicule à propulsion électrique ou hybride.

Ledit véhicule est par exemple un véhicule automobile, un véhicule de transport sur route ou ferroviaire, un véhicule maritime, ou autre.

Alternativement, la batterie 10 est destinée à une installation fixe ou mobile nécessitant un apport d'énergie électrique, sans raccord au réseau d'alimentation, ou en complément de celui-ci.

La batterie comprend une enceinte 12 fermée, sensiblement étanche (seul le couvercle en est représenté sur les figures par souci de clarté), et une pluralité d'éléments de batterie 14, ou cellules, disposées dans l'enceinte 12 et propres à stocker l'énergie électrique.

L'enceinte 12 comprend un couvercle supérieur amovible, partiellement représenté sur la figure 1, qui définit des orifices de passage 16 destinés à l'alimentation en fluide de refroidissement.

Chaque élément de batterie 14 présente une forme générale sensiblement parallélépipédique et définit ainsi une face supérieure 18, une face inférieure 20 et quatre faces latérales.

Les expressions « supérieure » et « inférieure » sont entendues ici relativement à un positionnement standard de la batterie en condition de fonctionnement.

Les éléments de batterie 14 sont disposés alignés selon au moins une rangée s'étendant selon une direction d'alignement X. On définit de plus une direction d'élévation Z et une direction transversale Y, toutes deux perpendiculaires entre elles et perpendiculaires à la direction d'alignement X, la direction d'élévation Z étant orienté sensiblement verticalement dans une orientation de fonctionnement standard de la batterie 10.

Les éléments de batterie 14 peuvent être disposés en contact les uns avec les autres par leurs faces latérales respectives, selon la direction d'alignement X, ou bien avec des écarts faibles entre deux éléments de batterie voisins selon la direction d'alignement X.

Chaque élément de batterie 14 comporte des connecteurs 22 disposés sur sa face supérieure 18, de part et d'autre de ladite face supérieure selon la direction transversale Y. Les connecteurs 22 des éléments de batterie forment ainsi deux rangées s'étendant selon la direction d'alignement X.

Les connecteurs 22 des éléments de batterie 14 sont branchés à des barres omnibus 24 parallèles qui s'étendent sensiblement selon la direction d'alignement X, permettant l'apport d'énergie dans les éléments de batterie 14 pour le stockage ou le retrait d'énergie des éléments de batterie pour alimenter un dispositif électrique.

La batterie 10, et plus particulièrement les éléments de batterie 14, génèrent de la chaleur en fonctionnement et nécessitent un refroidissement pour un fonctionnement optimal et pour avoir une durée de bon fonctionnement et une sécurité satisfaisante.

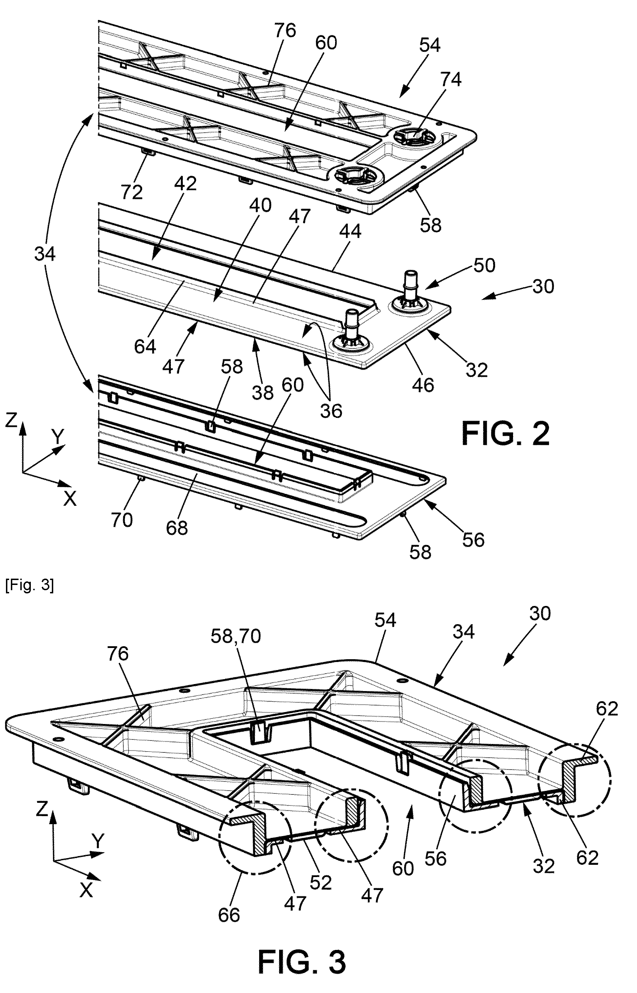

Pour cela, la batterie 10 comprend au moins un dispositif de refroidissement 30 d'éléments à refroidir de la batterie, représenté plus en détail sur les figures 2 à 4.

Les éléments à refroidir peuvent être les éléments de batterie 14, et plus spécifiquement les faces inférieures 20 ou latérales des éléments de batterie, ou encore les connecteurs 22 des éléments de batterie ainsi que les barres omnibus 24, qui sont disposés au-dessus des faces supérieures des éléments de batterie.

Dans l'exemple représenté sur les figures, le dispositif de refroidissement 30 est ainsi agencé pour refroidir les connecteurs 22 des éléments de batterie et les barres omnibus 24, et est ainsi positionné dans l'enceinte 12, suspendu au couvercle, au-dessus des éléments de batterie 14.

Le dispositif de refroidissement 30 comprend une enveloppe 32 souple destinée à accueillir le fluide de refroidissement, ainsi qu'une structure de support 34 adaptées pour améliorer la rigidité et la résistance du dispositif de refroidissement 30.

L'enveloppe 32 est formée de deux feuillets 36 de matériau souple s'étendant en regard l'un de l'autre et soudés en partie l'un à l'autre.

Ainsi, l'enveloppe 32 présente des régions de soudure 38, dans lesquelles les feuillets 36 sont solidaires l'un de l'autre, et des régions de séparation 40, dans lesquelles les feuillets 36 ne sont pas soudés l'un à l'autre et sont ainsi aptes à s'étendre l'écart l'un de l'autre, définissant entre eux un espace interne.

Les régions de soudure 38 suivent notamment un contour externe de l'enveloppe 32, de manière à rendre un espace interne de l'enveloppe 32 étanche.

Les feuillets 36 sont formés à partir d'un film multicouche découpé pour obtenir la géométrie souhaitée.

Le film est par exemple un empilement de couches comme suit : une première couche de polyéthylène téréphtalate (PET), une couche d'aluminium (Al), une deuxième couche de polyéthylène téréphtalate et une couche de polyéthylène (PE). Ce type de film est couramment utilisé dans l'industrie alimentaire, pour une isolation avantageuse des produits.

Dans le cas de l'enveloppe souple 32, la couche d'aluminium procure une très bonne conductivité thermique et réduit les risques de perméation de fluide à travers les feuillets, les couches de polyéthylène téréphtalate apportent une bonne tenue à la température et au milieu ambiant, et la couche de polyéthylène sert de couche adhésive, pour la fixation des deux feuillets par fusion des deux couches de polyéthylène en contact l'une de l'autre.

Dans l'exemple représenté, l'enveloppe 32 souple présente une forme sensiblement rectangulaire et définit une ouverture centrale 42 rectangulaire. La forme rectangulaire de l'enveloppe 32 comprend par exemple deux grands côtés 44, qui s'étendent selon la direction d'alignement X, et deux petits côtés 46, qui s'étendent selon la direction transversale Y.

L'enveloppe 32 définit des bords latéraux 47, notamment des bords latéraux 47 externes s'étendant le long des grands côtés et des petits côtés, ainsi que des bords latéraux 47 internes longeant l'ouverture centrale 42.

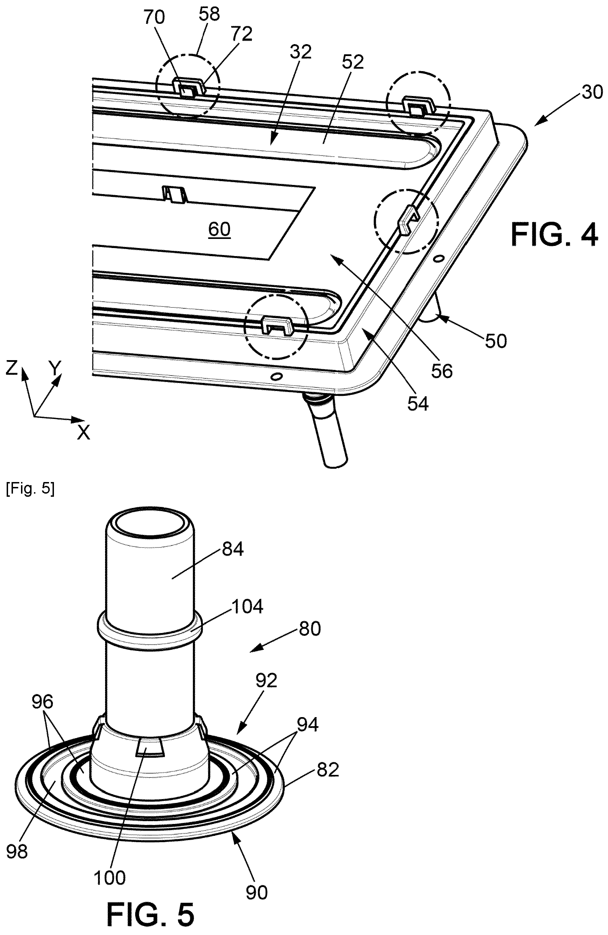

Le dispositif de refroidissement 30 comprend en outre au moins un connecteur fluidique 50 d'entrée et au moins un connecteur fluidique 50 de sortie, disposés dans l'enveloppe et au moins un conduit 52 de circulation de fluide, représenté sur les figures 3 et 4, s'étendant entre les feuillets 36 de l'enveloppe depuis l'au moins un connecteur 50 d'entrée jusqu'à l'au moins un connecteur 50 de sortie.

Les régions de séparations 40 des feuillets 36 définissent ensemble ledit au moins un conduit de circulation 52 de fluide dans l'espace interne.

Dans l'exemple représenté, les connecteurs fluidiques 50 d'entrée et de sortie sont positionnés au niveau d'un même côté de la forme rectangulaire de l'enveloppe 32.

Par exemple, les deux connecteurs fluidiques 50 sont positionnés sur un même petit côté 46 de la forme rectangulaire de l'enveloppe 32, c'est-à-dire au niveau d'une même extrémité de l'enveloppe 32 selon la direction d'alignement X, et de part et d'autre de ladite forme rectangulaire selon la direction transversale Y.

Dans l'exemple représenté, l'enveloppe 32 comprend un unique conduit de circulation 52 de fluide présentant une forme en U, c'est-à-dire que le conduit 52 s'étend depuis le connecteur 50 d'entrée le long d'un des grands côtés 44, puis du petit côté 46 opposé aux connecteurs 50, et le long de l'autre des grands côtés 44 jusqu'au connecteur de sortie.

Plus généralement, le conduit 52 s'étend selon un parcours formant au moins un aller-retour sur l'enveloppe 32, afin de longer les deux rangées de connecteurs 22 des éléments de batterie 14 et de permettre la connexion fluidique de l'entrée et de la sortie au niveau du même bord latéral 47 de l'enveloppe 32.

Le conduit 52 peut également s'étendre selon un parcours serpentant sur l'étendue de l'enveloppe 32, c'est-à-dire formant au moins un méandre, ce qui permet d'augmenter la surface refroidie.

Ainsi, le conduit 52 peut présenter une forme en V, en W, etc...

Alternativement, l'enveloppe 32 peut comprendre plusieurs conduits 52 s'étendant de manière divergente depuis au moins un point d'entrée et se regroupant à au moins un point de sortie. Encore alternativement, l'enveloppe 32 peut comprendre une pluralité de conduits 52 séparés fluidiquement les uns des autres.

Notamment, l'enveloppe 32 peut comprendre deux conduits 52 sensiblement rectilignes et parallèles entre eux, s'étendant le long des deux rangées de connecteurs 22 et des barres 24, selon la direction d'alignement X.

Selon l'invention, le dispositif de refroidissement 30 comprend en outre une structure de support 34 rigide pour l'enveloppe souple 32.

Les expressions « rigide » et « souple » s'entendent ici de manière relative l'une à l'autre. De plus, le caractère souple de l'enveloppe 32 implique que sans action externe, l'enveloppe se déforme sous l'effet de son propre poids, tandis que le caractère rigide de la structure de support 34 implique qu'elle ne subit pas de déformation notable sous l'effet de son propre poids.

La structure de support 34 comprend une première partie 54 et une deuxième partie 56, ainsi que des moyens d'assemblage 58 de la deuxième partie 56 et de la première partie 54.

Dans l'exemple considéré, la structure de support 34 et l'enveloppe 32 sont destinée à âtre disposées au-dessus des éléments de batterie 14.

La première partie 54 est donc une partie supérieure, disposée au-dessus de la deuxième partie 56 selon la direction d'élévation Z, la deuxième partie 56 étant donc une partie inférieure. La deuxième partie 56 et la première partie 54 sont conformées pour enserrer au moins un des bords latéraux 47 de l'enveloppe 32 entre elles, lorsqu'elles sont assemblées.

Ainsi, l'enveloppe souple 32 est maintenue par ses bords latéraux 47, qui sont maintenus serrés en appui entre les première et deuxième parties 54, 56 de la structure de support 34.

La première partie 54 et la deuxième partie 56 présentent par exemple chacune une forme de cadre rectangulaire plan, s'étendant perpendiculairement à la direction d'élévation Z, définissant une ouverture centrale 60, la première partie 54 et la deuxième partie 56 présentant ainsi des bords externes et des bords internes respectifs.

Avantageusement, la première partie 54 et la deuxième partie 56 comprennent des rebords 62 qui s'étendent le long de bords latéraux externes et/ou des bords latéraux internes, en saillie selon la direction d'élévation Z.

Avantageusement, l'enveloppe souple 32 peut comprendre des rabats 64 s'étendant le long des bords latéraux 47 internes de l'enveloppe 32 et longeant l'ouverture centrale 42, lesdits rabats 64 étant maintenus entre les rebords 62 de la première et de la deuxième partie de la structure de support 34. Ceci améliore encore le maintien de l'enveloppe souple entre les deux parties.

Avantageusement, les rebord 62 s'étendant le long des bords latéraux externes de la première partie 54 et de la deuxième partie 56 coopèrent pour former un rebord latéral 66 externe de la structure de support 34, agencé pour être positionné le long d'un contour externe de l'ensemble d'éléments de batteries 14, de manière à simplifier la mise en place du dispositif de refroidissement et à prévenir ses déplacements.

La deuxième partie 56 définit au moins un évidement 68 prévu pour s'ouvrir au niveau d'au moins une des régions de séparation 40 de l'enveloppe 32, de manière à permettre à l'enveloppe 32 de faire saillie hors de la structure de support 34 à travers ledit évidement 68. Chaque évidement 68 présente une forme identique à celle de l'un des conduits 52 de circulation de fluide. Ainsi, dans l'exemple représenté, l'évidement 68 est unique et présente une forme en U identique à celle du conduit 52 de circulation de fluide de l'enveloppe 32.

Cela permet à l'enveloppe 32 de s'étendre en saillie à travers l'évidement 68 sur toute l'étendue du conduit 52, pour atteindre les éléments à refroidir.

Chaque évidement 68 présente par exemple une largeur sensiblement constante sur sa longueur, mesurée transversalement à la direction locale d'élongation de l'évidement 68 et du conduit 52 de fluide de refroidissement.

La première partie 54 est avantageusement fermée en regard de chaque évidement 68 de la deuxième partie 56. Ceci permet de maintenir une contrepression sur l'enveloppe souple 32 pour prévenir une extension dans une direction non-désirée.

Les moyens d'assemblage 58 de la deuxième partie 56 à la première partie 54 sont par exemple des moyens d'assemblage par encliquetage comprenant au moins une dent 70 s'étendant en saillie depuis un bord de l'une parmi la deuxième partie et la première partie et au moins une indentation 72 correspondante définie par l'autre de la deuxième partie et de la première partie.

Par exemple, les moyens d'assemblage 58 comprennent des indentations 72 réparties le long du rebord interne et du rebord externe de la première partie 54 et des dents 70 correspondantes réparties le long du rebord interne et du rebord externe de la deuxième partie 56.

Avantageusement, la structure de support 34 comprend en outre des moyens de fixation adaptés pour fixer la structure de support 34 au couvercle de l'enceinte 12 de batterie électrique.

Les moyens d'assemblage sont par exemple positionnés sur la première partie 54, le long du rebord externe.

Les moyens de fixation de la structure de support 34 peuvent également ou alternativement être adaptés pour fixer la structure de support 34 à une paroi latérale ou inférieure de l'enceinte 12.

Les moyens de fixation peuvent également ou alternativement être adaptés pour fixer la structure de support 34 aux éléments de batterie 14, notamment aux faces inférieures 20, latérales ou supérieure 18 des éléments de batterie 14.

Les moyens de fixation de la structure de support 34 sont par exemple des moyens de fixation par encliquetage, par vissage, ou des moyens articulés.

La première partie 54 définit moins un orifice 74 agencé pour permettre le passage de chaque connecteur fluidique 50 reliés à l'enveloppe 32. Dans l'exemple représenté qui comporte deux connecteurs 50, la première partie 54 définit deux orifices 74.

Les orifices 74 sont par exemple sensiblement circulaires, et coïncident avec des orifices de passage 16 correspondants définis dans l'enceinte 12, notamment dans le couvercle de l'enceinte 12.

Alternativement, au moins l'un des orifices 74 est défini par la deuxième partie 56, selon la configuration des connecteurs 50.

Avantageusement, la première partie 54 comprend au moins une nervure 76 de rigidification, propre à améliorer la raideur de la structure de support 34 en flexion.

Les nervures 76 s'étendent par exemple selon la direction d'élévation Z, avantageusement du rebord externe jusqu'au rebord interne de la première partie 54.

Dans l'exemple représenté, la première partie 54 comprend une pluralité de telles nervures 76 formant des croisillons.

La structure de support 34 est formée en matériau plastique, notamment par moulage séparé de la première partie 54 et de la deuxième partie 56.

Alternativement, la structure de support 34 peut être formée par estampage, ou par fabrication additive.

Les connecteurs 50 fluidiques d'entrée et de sortie sont par exemple du type représenté sur les figures 5 à 8.

Les connecteurs fluidiques 50 sont disposés dans des orifices d'entrée ou de sortie respectifs ménagés dans les feuillets 36 formant l'enveloppe 32.

Chaque connecteur fluidique 50 comprend une embase 80 formée d'un socle 82 disposé intérieurement par rapport au feuillet 36 et d'un tube 84 solidaire du socle 82 et s'étendant à travers l'orifice du feuillet 36.

Le socle 82 est sensiblement perpendiculaire à la direction d'élévation dans l'exemple représenté, tandis que le tube 84 s'étend sensiblement selon la direction d'élévation Z.

Chaque connecteur fluidique 50 comprend en outre une bague 88 assemblée à l'embase 80, en appui sur une surface externe du feuillet 36.

Avantageusement, chaque connecteur fluidique 50 comprend en outre au moins un joint torique 86, disposé entre le socle 82 de l'embase 80 et la face interne du feuillet 36.

Dans ce cas, la bague 88 comprime le feuillet et le ou lesdits joints toriques 86 contre l'embase 80.

Le socle 82 définit une ouverture centrale 90 traversante à travers laquelle le tube 84 débouche dans l'espace interne de l'enveloppe souple 32.

Par exemple, le socle 82 présente une forme générale de disque, concentrique avec l'ouverture centrale 90.

Le socle 82 définit en outre une face supérieure 92 par laquelle le connecteur 50 est fixé à la face interne du feuillet 36, par une soudure entourant circonférentiellement le tube 84 et s'étendant autour de l'orifice.

Par exemple, le connecteur 50 comprend pour cela au moins une nervure 94 définie sur le socle 82, entourant circonférentiellement le tube 84, et notamment au moins deux nervures 94 radialement espacées l'une de l'autre par rapport au tube 84.

Les nervures 94 font saillie depuis le socle 82 jusqu'à une ligne de crête 96, par laquelle elles sont fixées à la face interne du feuillet 36.

La fixation des nervures 94 au feuillet 36 est par exemple réalisée par soudage thermique de la ligne de crête 96 sur la couche de polyéthylène interne du feuillet 36.

Les nervures 94 sont par exemples sensiblement circulaires et concentriques.

Avantageusement, les nervures 94 définissent entre elles au moins une gorge 98 de réception du joint torique 86.

Dans l'exemple représenté, l'embase 80 définit deux telles nervures 94, qui permettent d'avoir deux lignes de soudure au feuillet 36, et un unique joint torique 86 disposé dans la gorge 98 formée entre les deux nervures 94.

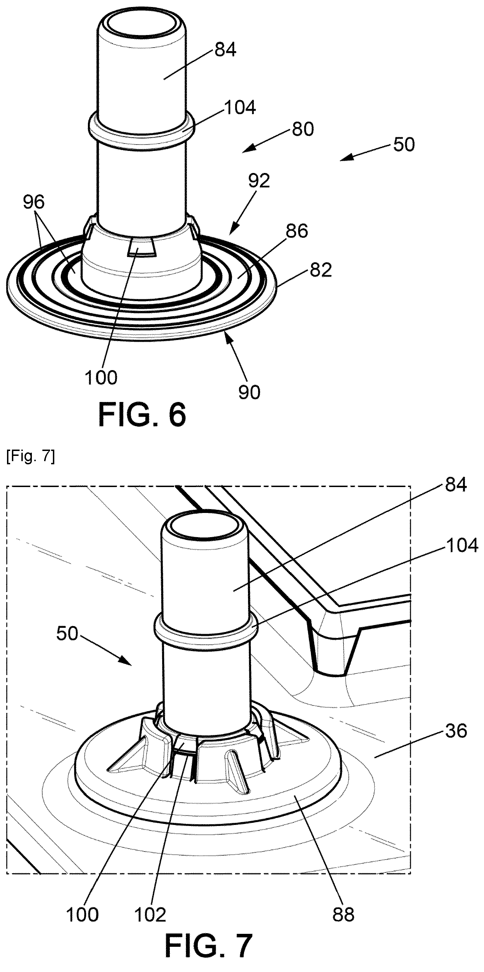

La bague 88, représentée sur la figure 7, est assemblée à l'embase, par exemple par vissage ou encliquetage, et entoure circonférentiellement le tube 84.

Dans l'exemple représenté, le tube 84 définit sur sa surface externe une pluralité de dents 100 régulièrement réparties autour de sa circonférence et qui font saillie radialement depuis le tube 84, tandis que la bague 88 définit un même nombre d'indentations 102 correspondantes, conformées pour recevoir les dents 100 par encliquetage lors de la fixation de la bague 88 à l'embase 80.

Alternativement, une surface externe du tube 84 peut définir un filetage et une surface interne de la bague 88 peut définir un filetage complémentaire, lesdits filetages permettant de fixer la bague 88 à l'embase 80 par vissage.

Ainsi, la bague 88 est disposée en appui contre une face externe du feuillet 36 et exerce un effort sur le joint torique 86 à travers le feuillet, ce qui permet d'avoir une étanchéité renforcée en plus des lignes de soudure aux nervures 94.

Le tube 84 peut également définir une nervure périphérique 104 de fixation d'un tuyau d'acheminement de fluide de refroidissement, qui s'étend à l'écart de la bague 88, du côté opposé au socle 82.

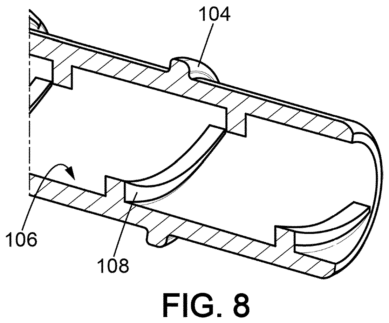

Avantageusement, comme représenté à la figure 8, une surface interne 106 du tube 84 présente des reliefs 108 agencés pour générer des turbulences dans un écoulement de fluide à travers le tube 84.

Lesdits reliefs 108 présentent par exemple des formes de rampes s'étendant sur la surface interne 106 du tube 84 selon une direction transverse à une direction d'élongation locale du tube 84, en saillie vers l'intérieur du tube 84.

De tels reliefs 108 permettent d'améliorer le brassage du fluide s'écoulant à travers le tube 84 et d'éviter la formation d'une couche de fluide stagnante le long de la surface interne 106, qui réduit l'efficacité du transfert thermique.

Alternativement, d'autres types de connecteurs fluidiques peuvent être envisagés, selon la position du dispositif de refroidissement 30 dans l'enceinte 10, et en fonction de l'angle d'accès aux connecteurs 50 pour les tuyaux d'acheminement de liquide de refroidissement.

Par exemple, les connecteurs peuvent s'étendre sensiblement selon la direction d'alignement X.

## Revendications

1. Dispositif de refroidissement (30) pour une batterie (10) électrique, le dispositif de refroidissement (30) comprenant :
- une enveloppe (32) formée de deux feuillets (36) de matériau souple s'étendant en regard l'un de l'autre, l'enveloppe (32) présentant des régions de soudure (38) dans lesquelles les feuillets (36) sont solidaires l'un de l'autre et des régions de séparation (40) dans lesquelles les feuillets (36) sont aptes à s'étendre l'écart l'un de l'autre, l'enveloppe (32) définissant des bords latéraux (47),
- au moins un conduit (52) de circulation de fluide s'étendant entre les feuillets (36) à travers au moins l'une des régions de séparation (40), et
- au moins un connecteur fluidique (50) d'entrée et au moins un connecteur fluidique (50) de sortie de l'enveloppe (32), débouchant dans l'au moins un conduit (52) de circulation de fluide,
- une structure de support (34) rigide, la structure de support (34) comprenant une première partie (54),
**caractérisé en ce que** la structure de support (34) comprend en outre une deuxième partie (56) ainsi que des moyens d'assemblage (58) de la deuxième partie (56) et de la première partie (54), la deuxième partie (56) et la première partie (54) étant conformées pour enserrer au moins un des bords latéraux (47) de l'enveloppe (32) entre elles, la deuxième partie (56) définissant au moins un évidement (68) prévu pour s'ouvrir au niveau d'au moins une des régions de séparation (40) de l'enveloppe (32) de manière à permettre à l'enveloppe (32) de faire saillie hors de la structure de support (34) à travers ledit évidement (68).

2. Dispositif de refroidissement (30) selon la revendication 1, dans lequel la structure de support (34) comprend en outre des moyens de fixation adaptés pour fixer la structure de support (34) à un couvercle, une paroi latérale et/ou une paroi inférieure d'une enceinte (12) de batterie (10) électrique, et/ou à des éléments de batterie (14) de la batterie électrique (10), par exemple des moyens de fixation par encliquetage, par vissage, ou des moyens articulés.

3. Dispositif de refroidissement (30) selon la revendication 1 ou 2, dans lequel les moyens d'assemblage (58) de la deuxième partie (56) à la première partie (54) sont des moyens d'assemblage par encliquetage comprenant au moins une dent (70) s'étendant en saillie depuis un bord de l'une parmi la deuxième partie (56) et la première partie (54) et au moins une indentation (72) correspondante définie par l'autre de la deuxième partie (56) et de la première partie (54).

4. Dispositif de refroidissement (30) selon l'une des revendications 1 à 3, dans lequel la première partie (54) est fermée en regard de chaque évidement (68) de la deuxième partie (56).

5. Dispositif de refroidissement (30) selon l'une des revendications 1 à 4, dans lequel la structure de support (34) définit un rebord latéral (66) agencé pour être positionné le long d'un contour externe d'un ensemble d'éléments (14) de batteries d'une batterie (10) électrique.

6. Dispositif de refroidissement (30) selon l'une des revendications 1 à 5, dans lequel l'une de la deuxième partie (56) ou de la première partie (54) définit au moins un orifice (74) agencé pour permettre le passage de l'un des connecteurs fluidiques (50) reliés à l'enveloppe (32).

7. Dispositif de refroidissement (30) selon l'une des revendications 1 à 6, dans lequel la structure de support (34) présente une forme sensiblement rectangulaire, l'évidement (68) de la deuxième partie (56) s'étendant selon un parcours formant au moins un aller-retour sur une étendue de ladite forme rectangulaire.

8. Dispositif de refroidissement (30) selon l'une des revendications 1 à 7, dans lequel au moins l'une de la deuxième partie (56) et de la première partie (54) comprend au moins une nervure (74) de rigidification.

9. Dispositif de refroidissement (30) selon l'une des revendications 1 à 8, dans lequel la structure de support (34) est formée en matériau plastique par moulage.

10. Batterie électrique (10) comprenant :
- une pluralité d'éléments de batterie (14) disposés dans une enceinte (12), chaque élément de batterie (14) présentant des éléments à refroidir (22, 24) disposés sur une face supérieure (18), inférieure (20), ou latérale de l'élément de batterie (14), et
- un dispositif de refroidissement (30) selon l'une des revendications précédentes,
la structure de support (34) étant positionnée pour avoir chaque évidement (68) en regard des éléments à refroidir (22, 24), l'enveloppe (32) souple étant disposée pour entrer en contact avec les éléments à refroidir (22, 24) lorsqu'un fluide de de refroidissement circule dans l'au moins un conduit de circulation (54).

## Patentansprüche

1. Kühlvorrichtung (30) für eine elektrische Batterie (10), wobei die Kühlvorrichtung (30) umfasst:
- eine Hülle (32), die aus zwei Lagen (36) aus nachgiebigem Material gebildet ist, die sich einander gegenüberliegend erstrecken, wobei die Hülle (32) Schweißbereiche (38) aufweist, in denen die Lagen (36) fest miteinander verbunden sind, sowie Trennbereiche (40), in denen sich die Lagen (36) voneinander weg erstrecken können, wobei die Hülle (32) Seitenkanten (47) definiert,
- zumindest einen Fluidströmungskanal (52), der sich zwischen den Lagen (36) durch zumindest einen der Trennbereiche (40) hindurch erstreckt, und
- zumindest einen Fluideinlassanschluss (50) und zumindest einen Fluidauslassanschluss (50) der Hülle (32), die in den zumindest einen Fluidströmungskanal (52) münden,
- eine starre Stützstruktur (34), wobei die Stützstruktur (34) einen ersten Abschnitt (54) umfasst,
**dadurch gekennzeichnet, dass** die Stützstruktur (34) ferner einen zweiten Abschnitt (56) sowie Verbindungsmittel (58) zum Verbinden des zweiten Abschnitts (56) und des ersten Abschnitts (54) umfasst, wobei der zweite Abschnitt (56) und der erste Abschnitt (54) so ausgeformt sind, dass sie zumindest eine der Seitenkanten (47) der Hülle (32) zwischen sich einschließen, wobei der zweite Abschnitt (56) zumindest eine Aussparung (68) definiert, die so vorgesehen ist, dass sie sich an zumindest einem der Trennbereiche (40) der Hülle (32) öffnet, damit die Hülle (32) durch die Aussparung (68) hindurch aus der Stützstruktur (34) herausragen kann.

2. Kühlvorrichtung (30) nach Anspruch 1,
wobei die Stützstruktur (34) ferner Befestigungsmittel umfasst, die dazu ausgelegt sind, die Stützstruktur (34) an einer Abdeckung, einer Seitenwand und/oder einer Bodenwand eines Gehäuses (12) der elektrischen Batterie (10) und/oder an Batteriezellen (14) der elektrischen Batterie (10) zu befestigen, beispielsweise Befestigungsmittel zum Einrasten oder Verschrauben oder Anlenkmittel.

3. Kühlvorrichtung (30) nach Anspruch 1 oder 2,
wobei die Verbindungsmittel (58) zum Verbinden des zweiten Abschnitts (56) mit dem ersten Abschnitt (54) Rastverbindungsmittel sind, die zumindest eine Raste (70) umfassen, die von einer Kante des einen aus zweitem Abschnitt (56) und erstem Abschnitt (54) absteht, sowie zumindest eine entsprechende Vertiefung (72), welche der andere aus zweitem Abschnitt (56) und erstem Abschnitt (54) definiert.

4. Kühlvorrichtung (30) nach einem der Ansprüche 1 bis 3,
wobei der erste Abschnitt (54) gegenüber jeder Aussparung (68) des zweiten Abschnitts (56) geschlossen ausgebildet ist.

5. Kühlvorrichtung (30) nach einem der Ansprüche 1 bis 4,
wobei die Stützstruktur (34) einen seitlichen Rand (66) definiert, der dazu vorgesehen ist, entlang einer Außenkontur einer Anordnung von Batteriezellen (14) einer elektrischen Batterie (10) positioniert zu werden.

6. Kühlvorrichtung (30) nach einem der Ansprüche 1 bis 5,
wobei einer aus zweitem Abschnitt (56) und erstem Abschnitt (54) zumindest eine Öffnung (74) definiert, die dazu vorgesehen ist, den Durchtritt eines der mit der Hülle (32) verbundenen Fluidanschlüsse (50) zu ermöglichen.

7. Kühlvorrichtung (30) nach einem der Ansprüche 1 bis 6,
wobei die Stützstruktur (34) eine im Wesentlichen rechteckige Form aufweist, wobei sich die Aussparung (68) des zweiten Abschnitts (56) entlang einer Bahn erstreckt, die zumindest eine Hin- und Rückführung über eine Erstreckung der rechteckigen Form bildet.

8. Kühlvorrichtung (30) nach einem der Ansprüche 1 bis 7,
wobei zumindest einer aus zweitem Abschnitt (56) und erstem Abschnitt (54) zumindest eine Versteifungsrippe (74) umfasst.

9. Kühlvorrichtung (30) nach einem der Ansprüche 1 bis 8,
wobei die Stützstruktur (34) durch Formen aus Kunststoffmaterial gebildet ist.

10. Elektrische Batterie (10), umfassend:
- eine Vielzahl von Batteriezellen (14), die in einem Gehäuse (12) angeordnet sind, wobei jede Batteriezelle (14) zu kühlende Elemente (22, 24) aufweist, die an einer oberen Fläche (18), einer unteren Fläche (20) oder einer Seitenfläche der Batteriezelle (14) angeordnet sind, und
- eine Kühlvorrichtung (30) nach einem der vorstehenden Ansprüche,
wobei die Stützstruktur (34) so positioniert ist, dass sie jeweils mit der Aussparung (68) den zu kühlenden Elementen (22, 24) gegenüberliegt, wobei die nachgiebige Hülle (32) so angeordnet ist, dass sie mit den zu kühlenden Elementen (22, 24) in Kontakt gelangt, wenn ein Kühlfluid in dem zumindest einen Strömungskanal (52) strömt.

## Claims

1. Cooling device (30) for an electric battery (10), the cooling device (30) comprising:
- a casing (32) formed from two sheets (36) of flexible material which extend facing one another, the casing (32) having weld regions (38) where the sheets (36) are secured to one another and separation regions (40) where the sheets (36) are able to extend at a distance from one another, the casing (32) defining lateral edges (47),
- at least one fluid circulation channel (52) extending between the sheets (36) through at least one of the separation regions (40), and
- at least one inlet fluidic connector (50) and at least one outlet fluidic connector (50) of the casing (32), opening into the at least one fluid circulation channel (52),
- a rigid support structure (34), the support structure (34) comprising a first part (54), **characterized in that** the rigid support structure (34) further comprises:
- a second part (56) as well as means for assembly (58) of the second part (56) and the first part (54), the second part (56) and the first part (54) being shaped to clasp at least one of the lateral edges (47) of the casing (32) between them, the second part (56) defining at least hollowed-out portion (68) intended to provide an opening at at least one of the separation regions (40) of the casing (32) so as to allow the casing (32) to protrude from the support structure (34) through said hollowed-out portion (68).

2. Cooling device (30) according to claim 1, wherein the support structure (34) further comprises means of attachment adapted to attach the support structure (34) to a cover, a side wall, and/or a lower wall of an enclosure (12) of an electric battery (10), and/or to battery elements (14) of the electric battery (10), for example means of attachment by snap-fastening, by screwing, or hinged means.

3. Cooling device (30) according to claim 1 or 2, wherein the means of assembling (58) the second part (56) to the first part (54) are snap-fastening means of assembly comprising at least one tooth (70) projecting from an edge of one among the second part (56) and the first part (54) and at least one corresponding indentation (72) defined by the other among the second part (56) and the first part (54).

4. Cooling device (30) according to one of claims 1 to 3, wherein the first part (54) is closed off opposite each hollowed-out portion (68) of the second part (56).

5. Cooling device (30) according to one of claims 1 to 4, wherein the support structure (34) defines a lateral edge (66) arranged to be positioned along an outer contour of a set of battery elements (14) of an electric battery (10).

6. Cooling device (30) according to one of claims 1 to 5, wherein one among the second part (56) and the first part (54) defines at least one orifice (74) arranged to allow one of the fluidic connectors (50) connected to the casing (32) to traverse it.

7. Cooling device (30) according to one of claims 1 to 7, wherein the support structure (34) has a substantially rectangular shape, the hollowed-out portion (68) of the second part (56) extending along a path forming at least one round trip over an area of said rectangular shape.

8. Cooling device (30) according to one of claims 1 to 7, wherein at least one among the second part (56) and the first part (54) comprises at least one stiffening rib (74).

9. Cooling device (30) according to claim one of claims 1 to 8, wherein the support structure (34) is formed from plastic material, by molding.

10. Electric battery (10) comprising:
- a plurality of battery elements (14) arranged in an enclosure (12), each battery element (14) having elements to be cooled (22, 24) which are arranged on an upper (18), lower (20), or side face of the battery element (14), and
- a cooling device (30) according to one of the preceding claims,
the support structure (34) being positioned to have each hollowed-out portion (68) opposite the elements to be cooled (22, 24), the flexible casing (32) being arranged to come into contact with the elements to be cooled (22, 24) when a coolant is circulating in the at least one circulation channel (52).
